# EUROPEAN PATENT APPLICATION

(11) **EP 3 933 735 A1**
(43) Date of publication of application: **05.01.2022**
(21) Application number: 20183049.4
(22) Date of filing: 30.06.2020
(51) Int. Cl.: G06Q 20/36, G06Q 20/22, G06Q 20/32

(54) **PAYMENT NETWORK WATCHING SERVICE**

(71) Applicant: Mastercard International Incorporated, Purchase NY 10577 (US)
(72) Inventor: Noë, James Christian, West Wickham, BR4 0BL (GB); RAYNOR, Nigel John, Haslemere, Surrey GU27 3AU (GB)
(74) Representative: Gill Jennings & Every LLP

(57) **Abstract**

The invention provides a watching service operated by a payment network. The watching service is able to identify transactions that are initiated using a first payment credential but fulfilled by a second, different payment credential. The watching service links these two aspects of the same transaction together such that an interchange fee payable in respect of the transaction is correct. Specifically, the watching service identifies a difference between an interchange fee calculated based on the first payment credential and an interchange fee calculated based on the second payment credential, and generates a payment instruction or payment request message depending on the calculated difference. The payment instruction / request causes a mismatch in the interchange fee to be rectified, such that at the end of the process all parties have paid the correct interchange fee.

## Description

### BACKGROUND

Increasingly, payment transactions are made electronically using a payment card or suitably configured electronic device. Such transactions are facilitated by a payment network, which serves (among other things) to provide a route for communication between the various parties involved in the transaction.

Card-based transactions typically involve an acquirer (merchant's bank), an issuer (cardholder's bank) and the payment network. The acquirer acts on behalf of the merchant to enable the merchant to take card-based payments, e.g. using a plastic card or payment-enabled data processing system such as a mobile telephone, smart watch, electronic fob, and the like. For each card-based transaction, the acquirer must pay an interchange fee to the issuer. The interchange fee is usually calculated based on a product of the card involved in the transaction, where the product can be (for example) credit, debit, prepaid, consumer or corporate (e.g. consumer credit, corporate debit, etc.). The interchange fee is often different for each product.

It is important to correctly calculate the interchange fee because it can be time-consuming and costly to rectify any mistakes after they have occurred. This is particularly important given that a typical payment network can handle hundreds of thousands or millions of card-based transactions per day, meaning that any mistake in the calculation of interchange fees that propagates through even a small percentage of transactions for just a short time can result in a large number of errors to correct.

Traditionally a card-based transaction makes use of credentials relating to a single payment card. In such cases it is relatively easy to correctly calculate the interchange fee using interchange fee rules and based on the product of the payment card used during the transaction. The interchange rate can therefore usually be calculated without significant risk of error.

More complex situations can arise where calculation of the correct interchange fee is more difficult. It would therefore be desirable to provide a payment network computer that is capable of correctly calculating an interchange fee in these more complex situations. Ideally, the payment network computer would calculate the correct interchange fee in a manner that requires little or no modification to the configuration of other systems involved in the transaction, e.g. acquirer systems and issuer systems.

### SUMMARY OF THE INVENTION

Broadly speaking the invention provides a watching service operated by a data processing system such as a server of a payment network. The watching service is able to identify transactions that are initiated using a first payment credential but fulfilled by a second, different payment credential. The watching service links these two aspects of the same transaction together such that an interchange fee payable in respect of the transaction is correct. Specifically, the watching service identifies a difference between an interchange fee calculated based on the first payment credential and an interchange fee calculated based on the second payment credential, and generates a payment instruction or payment request message depending on the calculated difference. The payment instruction / request causes a mismatch in the interchange fee to be rectified, such that at the end of the process all parties have paid the correct interchange fee. Key to the invention is to ensure that the merchant only pays the interchange that they were expecting to (for the first payment credential used in the transaction), the issuer of any secondary product receives the interchange that they were expecting (based on the second payment credential), and any delta is paid by/received by the issuer of the first payment credential.

The invention can be further used to calculate interchange on any transaction, including a transaction that involves just one payment credential as well as a transaction involving more than one payment credential, and send the correct rate to the acquirer or merchant. This could be desirable in the instance where a single Bank Identification Number (BIN) contains a multitude of products. For example, one BIN may be used by a payment network for the purposes of tokenisation, and in order to retain efficient use of BINs, a mixture of tokens may be issued from the BIN. In this instance, the payment network is best placed to work out which is the best interchange rate to use, and return this to the acquirer.

In a first aspect the invention provides a computer-implemented method implemented by a data processing system, comprising: receiving a first unique identifier associated with a payment device used to initiate a transaction and associated with a first payment account at a main issuer; obtaining a second unique identifier corresponding to a second payment account at a secondary issuer; calculating, using a first set of rules, a first value based on the first unique identifier; calculating, using a second set of rules, a second value based on the second unique identifier; calculating a difference between the first value and the second value; and either: determining that the first value is greater than the second value, generating a first payment instruction message having a first field, storing the difference in the first field of the payment instruction message; and transmitting the payment instruction message to a server of the main issuer, the payment instruction message causing a payment equal to the difference to be made by the data processing system to the main issuer; or determining that the second value is greater than the first value, generating a first payment request message having a first field, storing the difference in the first field of the payment request message; and transmitting the payment request message to a server of the main issuer, the payment request message causing a payment equal to the difference to be made by the main issuer to the data processing system,. The payment device may be any one of: a payment card, a smart wearable, a passive wearable, a sticker capable of payments, and a keyfob capable of making payments.

The method may further comprise generating a second payment instruction message having a second field; storing the second value in the second field; and transmitting the second payment instruction message to a server of the secondary issuer to cause an amount equal to the second value to be paid to the secondary issuer by the data processing system; wherein the second value is calculated based on a product associated with the second unique identifier. The product may be determined based on one or more attributes of a secondary payment account linked to the second unique identifier.

The method may further comprise, when the second value is greater than the first value: generating a second payment instruction message having a second field; storing the first value in the second field; transmitting the second payment instruction message to a server of the secondary issuer to cause an amount equal to the first value to be paid to the secondary issuer; generating a third payment instruction message having a third field; storing the difference in the third field of the third payment instruction message; and transmitting the third payment instruction message to the server of the secondary issuer to cause an amount equal to the difference to be paid to the secondary issuer; wherein the first value is calculated based on a product associated with the first unique identifier.

The method may further comprise receiving another payment instruction message from a server of an acquirer, the payment instruction message having a data field comprising the first value, to cause the acquirer to make a payment equal to the first value to the data processing server.

Obtaining the second unique identifier may further comprise retrieving the second unique identifier by: performing a lookup operation using the first unique identifier to identify a record in a data store corresponding to the first unique identifier; and extracting the second unique identifier from the record.

Receiving the first unique identifier may further comprise: receiving a third unique identifier from the payment device; sending a request to a tokenization service to provide the first unique identifier based on the third unique identifier, the request including the third unique identifier; and receiving a response to the request, the response comprising the first unique identifier; wherein the payment device is a communication device. The third unique identifier may be a digital primary account number, DPAN or a token.

In the first aspect the first unique identifier may be a funding primary account number, FPAN or a Digital PAN, DPAN. The second unique identifier may be a preferred primary account number, PPAN. The first set of rules and second set of rules may each comprise payment network card interchange rules. The first unique identifier may be received from a merchant point of sale, POS, terminal, a server of a merchant portal (e.g. an e-commerce site) or a virtual terminal executing on a merchant device.

In a second aspect the invention provides a data processing system configured to perform the method of the first aspect.

In a third aspect the invention provides a computer-readable medium having instructions stored thereon which, when executed by a data processing system , cause the data processing system to perform the method of the first aspect.

In a fourth aspect, the invention draws upon information held by the data processing system to establish the correct interchange rate where the data processing system is also a token vault, and applies the correct rate for the token being used and returns the rate to apply to the acquirer.

In a fifth aspect, the invention utilises the information held by the data processing system to establish the correct interchange rate for any standard card or tokenised transaction, and returns this to the acquirer to apply to the transaction.

### BRIEF DESCRIPTION OF THE DRAWINGS

Embodiments of the present invention are described below, by way of example only, with reference to the accompanying drawings, in which:
Figure 1 illustrates in schematic form a system suitable for implementing aspects of the invention;
Figure 2 schematically illustrates the exchange of data between various entities in embodiments of the present invention;
Figure 3 is a flow diagram setting out a method of initiating a payment transaction performed by a communication device according to an embodiment;
Figure 4 is a system diagram of an interchange calculation service according to an embodiment of the invention; and
Figure 5 shows in schematic form a data processing device that is suitable for performing the functions of components of the system shown in Figure 1 and Figure 4.

### DETAILED DESCRIPTION

In the following description aspects of the invention are at times described in the context of electronic payments. It will be appreciated however that the invention has application in contexts outside of electronic payments; specifically, any situation where a user authenticates themselves using one credential and seeks authorisation for performing an action using a different credential, where a fee is charged based on a characteristic of the credentials.

The present disclosure makes use of certain terminology that is defined as follows.

A Funding PAN (or FPAN) refers to the number of the payment instrument that the consumer knows - for example, this is often the sixteen digit card number printed or embossed on a plastic bank card, but it may also be stored electronically on the card, in a virtual representation (e.g. in an app), or may be a bank account number, or bank account number proxy. As used herein, 'consumer' means the customer of the bank that is performing the transaction. This may be an individual consumer, i.e. a private individual, or it may be a user of a corporate product issued by a financial institution. Other types of use will be apparent to the skilled person and such use is also within the scope of the term 'consumer'.

A Device or Digital PAN (or DPAN) refers to an alternate representation of the FPAN. A DPAN is also referred to as a token, and may be generated by a token service, such as the Mastercard Digital Enablement Service (MDES). A DPAN may be installed or provisioned to a device such as a smartphone, tablet, laptop computer or a wearable such as a smart watch (see later description of payment device 101), or it may be stored on a server to perform e-commerce transactions. In every instance, the DPAN is a surrogate for the FPAN, including surrogate PAN, expiry, sequence number, encryption keys and other associated and required payment data. Tokenisation helps prevent data breaches through attacks on various elements of the payment system, and provides many additional layers of security and fraud prevention not detailed in this application. During transaction processing, the consumer uses the DPAN, and the tokenisation service will typically perform cryptographic checks, and then retrieve the FPAN. The FPAN is then used to locate the consumer's account, and perform standard authorisation checks. The consumer does not know, or need to know the DPAN - they only ever need to know the FPAN, and in some instances tokenisation is possible with the consumer knowing neither the FPAN nor the DPAN.

A Preferred PAN (or PPAN) refers to a PAN, or set of payment credentials, from an alternate account or issuer that the consumer has selected to use for a given transaction.

During the course of a transaction, a merchant will only ever see the DPAN or FPAN, depending on the payment device the consumer has opted to use.

The present invention provides a method and system for implementation by a data processing system e.g. a server of a payment network. The invention provides a watching service that can calculate interchange fees in the scenario where a first or main payment credential used to initiate the transaction is linked to one or more secondary payment credentials that are each associated with respective funding sources that may be used to fund the transaction. The merchant's acquirer expects to pay an interchange fee based on the main payment credential used to initiate the transaction, regardless of how the transaction was initiated (in-store, by phone, online etc.). The merchant's acquirer may, for example, expect to pay a certain interchange fee based on a product and issuer indicated by the main payment credential. The merchant then expects to pay a corresponding 'discount fee' to their acquirer, similarly based upon the product used. The main payment credential corresponds to a main payment instrument issued by a main issuer.

A consumer chooses that the transaction should instead be funded using a secondary payment credential that is different to the main payment credential. The issuer of the secondary payment credential (the 'secondary issuer') expects payment of an interchange fee based upon the secondary payment credential's parameters. The interchange fee that the secondary issuer expects to receive may not be the same as the interchange fee that the acquirer expects to pay based upon the main payment credential's parameters.

In order to rectify this discrepancy, the invention provides a watching service implemented by a data processing system, e.g. a server of a payment processing network, where the data processing system is configured to monitor the respective payment credentials used to initiate and fund each transaction. The data processing system calculates the values of the associated interchange fees based upon characteristics of the main payment credential and the secondary payment credential.

The data processing system then calculates the difference ('delta') between the two values and:
- Pays the secondary issuer the correct amount for the payment instrument selected (i.e. the payment instrument corresponding to the secondary payment credential) - this may be done, preferably, in one payment, or two payments where a deficit in the amount initially paid to the secondary issuer is rectified following receipt of a payment equal to the delta from the main issuer
- In the event the data processing system calculates a delta whereby the payment received from the acquirer is greater than the amount paid to the secondary issuer, this amount is sent to the main issuer
- In the event the data processing system calculates a delta whereby the payment received from the acquirer is less than the amount paid to the secondary issuer, this amount is collected from the main issuer
- In the event the data processing system calculates that the amounts are identical, no further action is taken

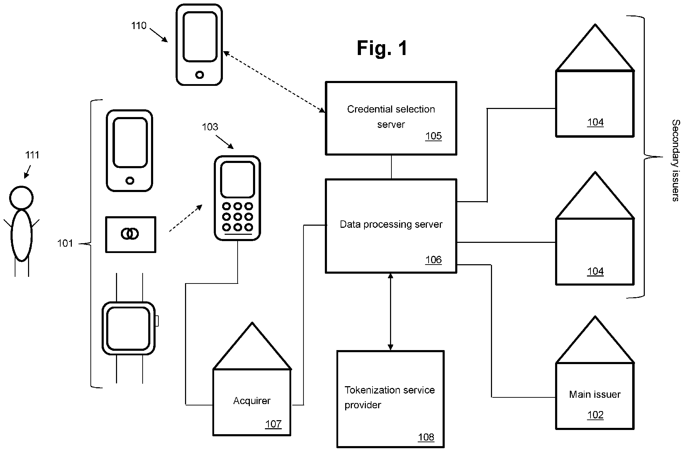

Fig. 1 shows an exemplary example of a system and environment for use in some embodiments of the present invention. The system comprises a payment device 101 from which payments may be initiated in combination with a merchant POS terminal 103. The payment device 101 may be any valid payment instrument that the merchant accepts and the acquirer, payment network, and issuer are able to process. Examples include a payment card, a mobile device such as a mobile telephone, particularly a smart phone, a smart wearable device such as a smart watch, a passive wearable such as a smart ring, a key fob capable of making payments and a sticker capable of making payments. Essentially, payment device 101 can be embodied by any payment instrument approved by a card-scheme such that it can make electronic payments. The payment device 101 may have installed one or more software applications that enable the device to securely pass payment credentials to merchant POS terminal 103. The invention can also operate in an e-commerce environment, i.e. online or 'card not present' transactions rather than in connection with a point of sale terminal, and in such cases payment device 101 can take the form of a desktop computer, a tablet computer, a laptop computer, a mobile telephone or any other such electronic device that is able to communicate over a network such as the internet with e.g. a merchant server and an acquirer server.

An authorization request generated by the merchant POS terminal 103 is routed to a server of the merchant's acquirer 107, which then routes the transaction to a data processing server 106, which may be a transaction processing server forming part of a payment processing system operated by a network of a payment processing organisation such as Mastercard^{®}, for further processing. The payment device 101 in this embodiment comprises a communication device having a communication element, e.g. a near field communication (NFC) element, Bluetooth element or Bluetooth Low Energy element, capable of communicating with wirelessly enabled devices, and may additionally have a chip embedded into the card that meets the relevant EMVCo^{®} and card scheme standards, furthermore, it may contain a magnetic stripe that contains the payment credentials. The payment device 101 further comprises a cryptographic element capable of performing cryptographic processes, preferably in line with EMV^{®} specifications.

The communication device may be a passive payment device, such as an integrated circuit card, ICC, or a wearable payment device such as a smart watch or a ring. The communication device may alternatively be an active payment device, such as a mobile telephone, tablet computer, laptop computer, desktop computer, and the like. In this case the communication device supports the provisioning of payment credentials onto it, in a manner that is known in the art per se.

The payment device 101 is linked to a payment account at main issuer 102 associated with the consumer 111. The payment device 101 may have stored thereon identification credentials such as a Primary Account Number (PAN) (hereafter "main PAN" or "FPAN") or a tokenized digital PAN (DPAN) that can be used to identify the payment account. These identification credentials may be stored in an encrypted form. The payment devices will also have the other relevant payment credentials, such as encryption keys, sequence number, service code, expiration date etc. as is known in the art per se.

A tokenization service provider 108, such as the Mastercard Digital Enablement Service (MDES), may be responsible for provisioning payment tokens and processing transactions conducted with them.

When the consumer 111 registers a payment credential (e.g. FPAN) to payment device 101, the tokenization service provider 108 generates a DPAN which is provided to the device and stored on the device 101 in place of the FPAN. The tokenization service provider 108 is capable of mapping the DPAN to the FPAN so as to be able to retrieve the FPAN based on the DPAN when necessary. The tokenization service provider 108 may, for example, manage a database comprising a lookup table in which the underlying FPAN is indicated in relation to the DPAN. The tokenization service provider 108 may also perform other functions during transaction processing, such as validating cryptogams, and checking that the transaction is permitted for that device/consumer.

During a transaction authorization process, the DPAN may be used in an authorization request message at the initiation of the transaction. Specifically, the DPAN may be included in the authorization request message, which is passed from the payment device 101 to a merchant POS terminal 103 to a server of an acquiring institution 107 associated with the merchant. The acquiring institution 107 processes the authorization request message and forwards the authorization request message to the data processing server 106 for further processing. When the data processing server 106 receives the authorization request message, the data processing server 106 requests that the tokenization service provider 108 replaces the DPAN with the linked FPAN. The data processing server 106 may then update the authorization request message to include the FPAN along with the DPAN for sending on to a server of the main issuer 102.

The consumer 111 has access to a number of payment accounts, at least some of which are held at institutions run by issuers 104 (hereafter "secondary issuers") that are not the main issuer 102. The consumer 111 has secondary payment credentials relating to the accounts at the secondary issuers for identifying the accounts during payment authorizations. It will be appreciated that the secondary issuer 104 can be the same entity as the main issuer 102; in that case, the account linked to payment device 101 is a different account to the account linked to a given secondary payment credential such that the consumer 111 still funds the transaction using a different payment account to the payment account associated with payment device 101. The invention can operate equally well in this scenario, where the same entity acts as both main issuer 102 and secondary issuer 104.

The consumer 111 also has access to a communication device 110 having a data connection, such as a 3G, 4G or 5G data connection, or WiFi data connection, allowing over the air (OTA) updates and data exchanges. This may be e.g. a mobile communication device such as a mobile telephone, tablet or laptop computer, or a more traditional desktop computer. Other suitable computing devices for communication device 110 will be apparent to the skilled person.

The communication device 110 and the payment device 101 may be the same device. In this case the communication device 110 performs certain functions that are described here in relation to the payment device 101, such as providing user authentication, generating cryptograms through interactions with a merchant POS 103, and other transaction initiation processes.

The communication device 110 may have stored on its internal memory an application which the consumer 111 may use of to make a selection of payment credentials associated with a secondary issuer 104 to which payments initiated with the payment device 101 should be directed. The application operates to cause a selection of a preferred secondary account to be stored in a credential selection database that is itself stored on a remote credential selection server 105, which may be accessed by a data processing server 106 during processing of the payment. In effect, the application allows the consumer 111 to specify a secondary payment account from which funds are to be deducted as part of a transaction, where the secondary payment account is not the same as the main payment account that is linked to the payment device 101 and main payment credential. As noted above, the issuer of the secondary payment account may be the same entity as the issuer of the main payment account, or the issuers may be different.

It will be appreciated that a bespoke application is not the only possible implementation for making a credential selection. Alternatively, a web browser application installed on communication device 110 may be used by the consumer 111 to access an account, e.g. as hosted by transaction processing network server 106 or credential selection server 105, or the main issuer 102, where the account provides functionality for the consumer 111 to make a selection of their preferred payment credentials. Other suitable techniques for enabling the consumer 111 to make a credential selection will be apparent to the skilled person having the benefit of the present disclosure.

The credential selection database 105 may comprise a lookup table in which a secondary payment credential or unique identifier, such as a PAN (hereafter "preferred PAN" or "PPAN"), for a preferred account at a secondary issuer 104 is associated with the main payment credential, which may be the FPAN or DPAN for an account linked to the payment device 101. The user may access the credential selection server 105 via the application or web browser and update the preferred account by replacing the PPAN associated with the main payment credential with a PPAN for a different secondary account. Alternatively, the lookup table may comprise details of a number of different PPANs, each associated with a different identifier. The identifier could be provided as part of an authorization method in order to indicate to the data processing server 106 which PPAN has been selected. The lookup table may comprise data entries comprising timestamps indicating a time when a given secondary payment credential was selected as the PPAN. For transactions processed at a later time, the data processing network 106 may use the time stamp associated with PPAN selections to determine which secondary payment credential was selected as the preferred funding credential at the time of the transaction.

To initiate a transaction, the POS terminal may provide transaction details to the payment device 101. The transaction details include the main payment credential and may include any combination of: a transaction amount, a merchant name, an Unpredictable Number generated by the POS terminal, a transaction type indicating that the transaction is a contactless transaction made face-to-face at a POS terminal, a transaction date, and other transaction details as may be described in EMV^{®} contactless payment specifications. The user may bring the payment device 101 into the vicinity of the POS terminal 103, upon which the POS terminal 103 will provide the transaction details to the payment device 101 via a wireless communication channel, e.g. a NFC communication channel. Alternatively, payment may be initiated using a chip and PIN protocol or magnetic stripe protocol at a POS terminal 103, or any other method of initiating a transaction using payment credentials associated with a funding account.

The merchant POS terminal 103 generates an authorization request message comprising the transaction details including the main payment credential that is to be used by the data processing server 106 of the payment network to identify a payment account at a main issuer 102. The authorization request message may be an electronic message formatted in accordance with the ISO 8583 standard. The authentication request message may identify an account at the main issuer 102 using the main PAN (FPAN) of the payment device 101. Alternatively, the authentication request message may identify an account at the main issuer 102 using a DPAN that may be mapped onto the main PAN (FPAN) by a tokenization service accessible by the data processing server 106.

The merchant POS 103 sends the authorization request message to a server at an acquirer 107 associated with the merchant. The acquirer 107 sends the authorization request message to a data processing server 106 that forms part of a payment processing network, such as the network operated by Mastercard^{®}.

Upon receiving the authorization request message, the data processing server 106 may perform various security checks, such as validating a cryptogram included in the authorization request message. If the authorization request comprises a DPAN rather than a main PAN (FPAN), the data processing server 106 may be required to contact a tokenization service in order to retrieve the main PAN (FPAN). If the payment processing server 106 does not have access to cryptographic tools corresponding to the cryptographic tools used to generate the cryptogram, the payment processing server 106 can contact the main issuer 102 for validation of the cryptogram. The payment processing server 106 can either request cryptographic tools suitable for validation of the cryptogram from the main issuer 102, or the payment processing server 106 can provide transaction details to the main issuer for remote validation.

The data processing server 106 accesses the credential selection server 105 in order to determine which (if any) secondary issuer 104 and PPAN that the consumer 111 has previously selected, e.g. using the application discussed above, or a web browser. In some examples, the data processing server 106 determines that it should access the credential selection server 105 based on whether part or all of the main PAN or DPAN in the authorization request message belonging to a range associated with the use of secondary payment accounts. Alternatively, the authorization request message may comprise a tag indicating that the main PAN / DPAN is associated with a number of secondary funding accounts. Whatever the specific method employed, the data processing server 106 retrieves the PPAN associated with the secondary issuer 104 that corresponds to the main PAN or DPAN in the authorization request message.

The payment processing server 106 generates an updated authorization request message for sending to the secondary issuer 104, including the PPAN and the transaction details included in the original authorization request message. Upon successfully authorizing the transaction based on the updated authorization request message, the secondary issuer 104 sends an authorization response message to the payment processing server 106, which is sent to the acquirer 107 and onto the merchant 103 to confirm that a payment has been authorized. If the payment is not authorized by the secondary issuer 104, a 'transaction declined' message is instead received by the payment processing server 106 from the secondary issuer 104.

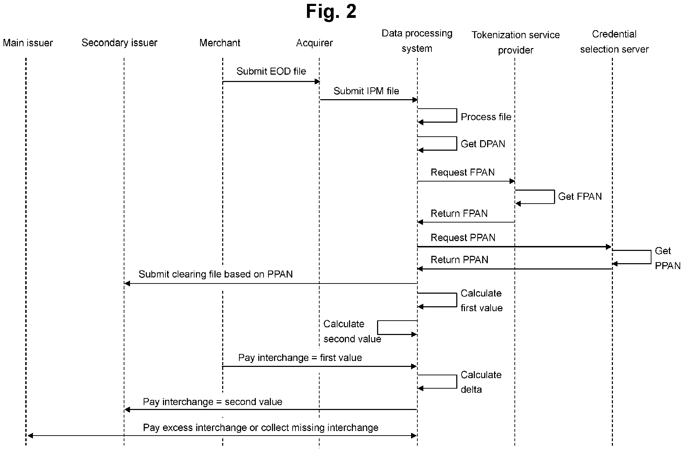

Subsequent to the successful authorization of the transaction, clearing and settlement of the transactions takes place, as described in more detail with reference to Fig. 2.

To initiate the process of Fig. 2 the merchant 103 sends the acquirer 107 an electronic message comprising an End of Day (EOD) file comprising details of transactions to be settled with various card schemes/networks and/or issuers. The EOD file identifies the transactions for settlement using the payment credentials used on initiation of the transaction, e.g. the main PAN and/or DPAN, and further comprises details including the transaction amount. It is important to understand that transactions that are funded using a PPAN as described above are identified in the EOD file by the main PAN / FPAN or DPAN used to initiate the transaction, rather than the PPAN.

The acquirer sends the data processing server 106 an electronic message comprising a file comprising details of transactions for clearing and subsequent settlement with the card scheme 106. The file may be formatted according to a standardised format, such as Mastercard's Integrated Product Message (IPM) format. However, the invention is not limited in this respect and any suitable file format can be used for this message.

If the transaction was initiated using a DPAN, as in the example of Fig. 2, the data processing server 106 contacts the tokenization service provider 108 and requests the detokenized main PAN based on the DPAN. The tokenization service provider 108 determines the main PAN based on the DPAN and returns the main PAN to the data processing server 106.

For transactions that were initiated using a main PAN but funded using a PPAN, the IPM message will identify the transaction using the main PAN. It will be appreciated that the detokenization process is not performed in the case where the transaction was initiated using a main PAN, such that the steps 'Request FPAN', 'Get FPAN', and 'Return FPAN' of Fig. 2 can be omitted in that case.

Upon receiving the main PAN from the tokenization service provider, or extracting the main PAN directly from the IPM message where the transaction was initiated with the main PAN rather than a DPAN, the data processing server 106 determines the PPAN that was used to fund the transaction. In some embodiments, the data processing server 106 may communicate with the credential selection server 105 to determine the PPAN associated with the transaction. The data processing server 106 may search the credential selection database on the credential selection server 106 for a PPAN associated with the main PAN. The data processing server 106 may also search for entries where the PPAN is associated with a time code in the vicinity of the transaction time (for example, the closest time before the transaction time), or for entries comprising a tag included in the authorization request and IPM message. See steps 'Request PPAN', 'Get PPAN' and 'Return PPAN' of Fig. 2.

Upon determining the PPAN selected by the consumer 111 for the transaction, the data processing server 106 determines the identity of the secondary issuer, this being the issuer associated with the PPAN. In some examples, different issuers are associated with different PPAN ranges, and the issuer associated with the PPAN is determined by checking which issuer is associated with the relevant PPAN range in a directory. Once identified, a clearing file for the transaction is sent to the secondary issuer of the PPAN (Fig. 2, 'Submit clearing file based on PPAN').

Referring now to the steps of Fig. 2 between 'Calculate first value' and 'Pay excess interchange or collect missing interchange', the invention operates as follows. An interchange fee is paid (via the data processing server) by the acquirer 107 to the main issuer for the transaction. The interchange fee amount is calculated according to predefined rules. For example, the interchange fee for a given issuer may be determined by the product of the payment credential used in the transaction. For example, credit cards, debit cards, and prepaid cards may each have a different associated interchange fee. The fee may be a fixed fee or may be a percentage of the total transaction amount or maybe calculated according to another suitable rule. The interchange fee can also vary according to attributes of a payment account - e.g. one debit card may be defined as a particular type or class of debit card having a first interchange fee and a second debit card may be defined as a different type or class of debit card having a second, different interchange fee (for example, a premium product may command a higher interchange fee than a basic product). The attributes of a given payment credential may be identified using the main PAN or DPAN, e.g. a part or all of the main PAN / DPAN may be compared against a set of predefined ranges to identify which range the main PAN / DPAN resides within. From this, the corresponding product can be determined.

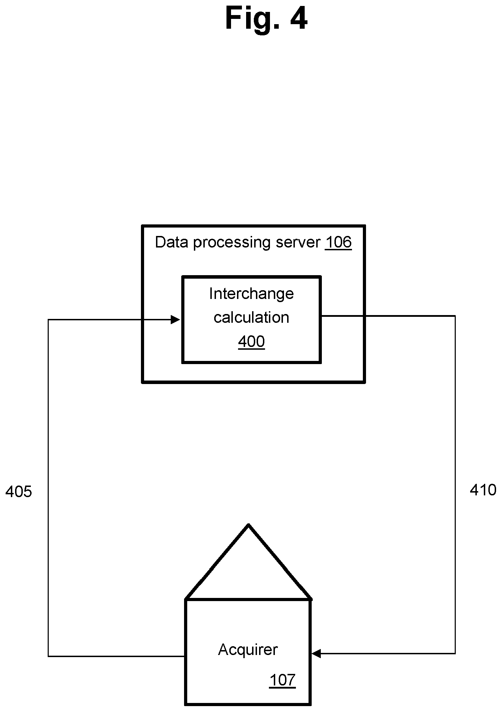

Referring briefly to Figure 4, it is also possible for the acquirer to determine the interchange fee without examination of the details of the main PAN / DPAN. In this case, instead of using the main PAN / DPAN to identify the product, e.g. by identifying an account range associated with the main PAN / DPAN, an interchange calculation service 400 can be provided, e.g. by data processing server 106. The interchange calculation service 400 is configured to provide an interchange fee associated with a given payment credential.

The interchange calculation service 400 enables an entity such as acquirer 107 to transmit a call 405 to the entity hosting the interchange calculation service 400, which in the illustrated example is the data processing server 106. Upon receipt of this call 405, the interchange calculation service 400 performs some processing and provides a response 410. The response 410 can take various forms as detailed in the following paragraphs.

The response 410 of the interchange calculation service 400 comprise a product code generated by service 400, where the product code is associated with a particular payment credential. This product code can be included in an authorisation response message, e.g. stored within a corresponding product code field. The product code can be used by the acquirer 107 to identify the product, on which basis the interchange fee is calculated and paid by the acquirer 107. This can advantageously enable payment network operators to more efficiently allocate payment credential unique identifiers, e.g. account ranges.

Alternatively, the data processing server 106 may determine a specific interchange rate or designator to use, and return this to the acquirer 107 via response 410. The acquirer 107 will then use this rate or designator to calculate the interchange amount, in place of any determination of product and associated interchange fees.

As a further alternative, the data processing server 106 may determine the interchange amount to use, and return this to the acquirer 107 via response 410. The acquirer 107 will then use this as the interchange amount payable, and not perform any of their own calculations.

This process may be useful when:
- An acquirer 107 does not want to perform their own complex interchange calculation - giving them the benefit of a simpler, more easily manageable system
- A data processing server 106 may be acting as a token vault, or virtual card issuer, and in order to ensure an efficient use of BINs, may issue tokens, virtual card numbers and the like, which have different interchange rates, under the same BIN, thus making interchange calculations at the acquirer 107 impossible or overly complex

Interchange fees are not generally the same for different products. The acquirer 107 calculates the interchange fee based on the main PAN or DPAN that was used to initiate the transaction, or calls the interchange calculation service described directly above to obtain the interchange rate or interchange amount. Because the transaction is eventually funded using the PPAN, the secondary issuer associated with the PPAN expects to receive an interchange fee based on the PPAN, e.g. a product associated with the PPAN. The interchange fee due on the transaction using the PPAN is not generally the same as the interchange fee calculated using the main PAN or DPAN that was used to initiate the transaction, e.g. because the product associated with the main PAN / DPAN is different from the product associated with the PPAN. The interchange fee that the acquirer 107 expects to pay may not therefore be the same as the interchange fee that the secondary issuer expects to receive.

The data processing server 106 has access to both the main PAN and the PPAN, as described above. As shown in Fig. 2, the data processing server 106 determines a first interchange fee value that the acquirer 107 expects to pay based on the main PAN. The data processing server also determines a second interchange fee value that the secondary issuer expects to receive based on the PPAN. A discrepancy or 'delta' between the first and second interchange fee values may be present which the invention is operable to negate in the manner described below.

The data processing server 106 calculates the difference between the first and second values. If the difference between the values is zero, the data processing server 106 does not perform any further steps relating to the interchange for the transaction.

If the second value (amount to pay secondary issuer 104) is greater than the first value (amount received from acquirer 107), the data processing server 106 generates a payment request message including a data element indicating an amount equal to the difference in the first and second values. The payment request message is sent to the main issuer 102 associated with the main PAN to request payment for the difference in the first and second values from the main issuer 102 to the secondary issuer 104 via data processing server 106, e.g. via a payment network. This may work in one of the following ways:
- The data processing system 106 sends the correct amount to the secondary issuer 104, and either collects the difference from the main issuer 102 asynchronously (here, 'correct amount' refers to the interchange fee calculated based on the secondary payment credential); or
- The data processing system 106 sends the amount received from the acquirer 107 to the secondary issuer 104, and upon receipt of the difference from the main issuer 102, sends this to the secondary issuer 104

The first option above is preferred as it is more streamlined, and likely to create less confusion with secondary issuers 104, furthermore, from the secondary issuer's 104 perspective, it functions as it does today. Nevertheless, the invention can be implemented in the second manner, which therefore also falls within the scope of the invention.

If the first value (amount received from the acquirer 107) is greater than the second value (amount to pay secondary issuer 104), the data processing server 106 generates a payment instruction message with a data element indicating an amount equal to the difference between the first and second values. The payment instruction message is sent to the main issuer 102 associated with the main PAN to enable the main issuer 102 to receive a payment for the difference in the first and second values from data processing server 106, e.g. from a payment network.

In this way, the difference or 'delta' in interchange fees arising from the use of a main payment credential and secondary payment credential in a single transaction is removed, with the result that the acquirer 107 and secondary issuer 104 have paid and received the correct amount, and any difference is supported by the main issuer 102, and the process is facilitated by the card scheme 106.

Advantageously, the invention operates so that calculation of the delta and handling of any subsequent payments is performed centrally by the data processing server 106. This means that no modifications are needed to the configuration of secondary issuer systems 104, or acquirer systems 107, in order to support transactions involving using two distinct payment credentials. Indeed, the secondary issuer 104 may not even be aware that the main issuer 102 has been involved in the transaction, and may not be aware that the transaction involved two different payment credentials. Disruption to issuer systems is therefore minimal, or even zero, whilst user experience is improved as they are provided with the flexibility to ability to effect payment using a different payment credential to the payment credential they present at the point of sale.

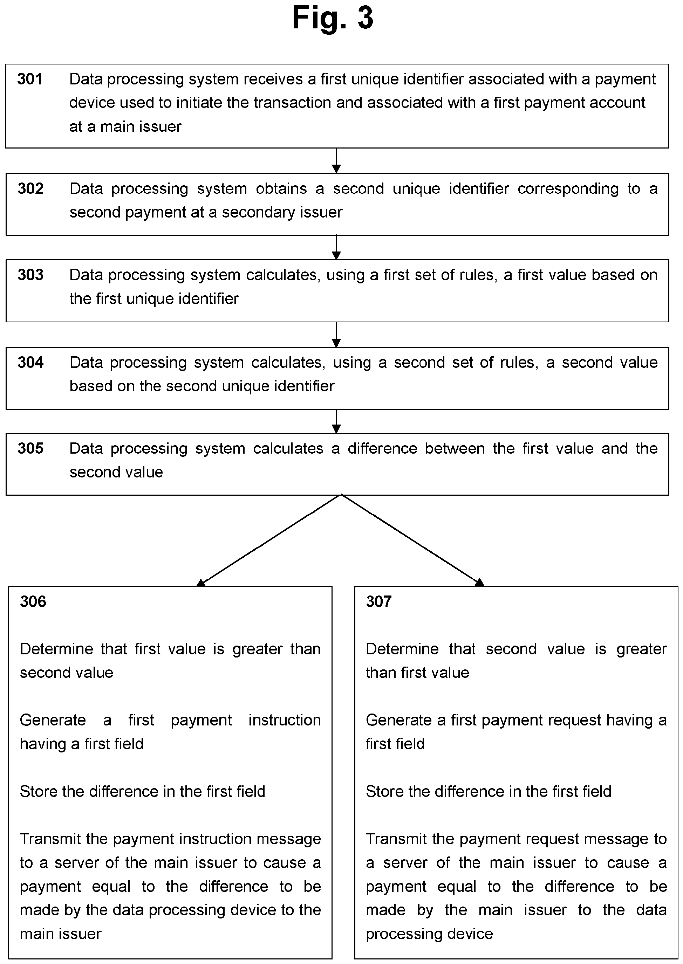

Fig 3 is a flow diagram showing steps performed by the data processing server 106 in an embodiment of the invention. The method shown in Fig. 3 enables data processing server 106 to determine a difference in the interchange fee paid by the acquirer 107 compared with the interchange fee paid to the secondary issuer 104 and to automatically generate a payment instruction to remove this difference.

In Step 301, the data processing server 106 receives a first unique identifier associated with a payment device used to initiate the transaction and associated with a first payment account at a main issuer.

In some embodiments, the first unique identifier is the main PAN discussed above which is associated with a payment card used to initiate a transaction or the DPAN discussed above which is associated with an electronic device (e.g. communication device 110) used to initiate the transaction. The main PAN is associated with a payment account at the main issuer or the DPAN is associated with a main PAN that is in turn associated with the main issuer. The first unique identifier may be received as part of a clearing request file associated with a transaction initiated using the first unique identifier.

In Step 302, the data processing server 106 obtains a second unique identifier corresponding to a second payment at a secondary issuer.

In some embodiments, the second unique identifier is the PPAN discussed above which is associated with a second payment account provided by the secondary issuer. In practice the main issuer and secondary issuer may be the same entity, or a different entity. The consumer 111 has previously selected, as described above, that the PPAN should be used to fund the transaction in preference to the main PAN. This preference may be entered in a credential selection database stored on a credential selection server 105.

In Step 303, the data processing server 106 calculates, using a first set of rules, a first value based on the first unique identifier.

In some embodiments, the first value is an interchange fee associated with the first unique identifier. Where the first unique identifier is the main PAN the interchange fee is associated with a particular issuer and product in the manner described above. The first set of rules may be payment network card interchange rules that assign values or rates to each product. The values / rates assigned may be referred to as Interchange Rate Designators (IRDs). The first set of rules may, for example, indicate a particular fixed fee or percentage of the transaction amount associated with each product belonging to each issuer.

In Step 304, the data processing server 106 calculates, using a second set of rules, a second value based on the second unique identifier. The second set of rules may be the same as the first set of rules, or different.

In some embodiments, the second value is an interchange fee associated with the second unique identifier. Where the second unique identifier is the PPAN this is also associated with a particular issuer and product, in the same manner as described above for the main PAN.

In Step 305, the data processing server 106 calculates a difference between the first value and the second value. This may be calculated by subtracting the first value from the second value, or vice versa.

If it is determined that the first value is greater than the second value, the data processing server 106 performs Step 306. The data processing server 106 generates a payment instruction message having a first field, stores the difference in the first field of the payment instruction message; and transmits the payment instruction message to a server of the main issuer. The payment instruction message causes a payment to be made by data processing system 106 to the main issuer with an amount equal to the difference between the first and second values.

That is, in this scenario, the interchange fee paid by the acquirer 107 is greater than the interchange fee expected by the secondary issuer 104. The difference in the interchange fees is paid back to the main issuer 102, e.g. by the payment processing network, such that the net effect is that the acquirer 107 pays the interchange fee it expects based on the main PAN, the secondary issuer 104 receives the interchange fee it expects based on the PPAN, and the difference is passed on from the payment network to the main issuer 102. The payment network does not profit from the operation of the invention because all of the difference is passed on to the main issuer.

If it is determined that the second value is greater than the first value, the data processing server 106 performs Step 307. The data processing server 106 generates a payment instruction message having a first field, stores the difference in the first field of the payment instruction message; and transmit the payment instruction message to a server of the main issuer 102. The payment instruction message causes the main issuer to make a payment to data processing system 106, e.g. the payment network, with an amount equal to the difference between the first and second values. This difference is either passed on to the secondary issuer 104 in the embodiment where the secondary issuer 104 has received only the amount paid by the acquirer 107, or retained by the data processing server 106 in the embodiment where the correct amount has already been paid to the secondary issuer by data processing server 106.

That is, in this scenario, the interchange fee paid by the acquirer 107 is less than the interchange fee paid to the secondary issuer 102. The difference in the fees is paid to the data processing server 106 by the main issuer 102, such that the net effect is that the acquirer 107 pays the interchange fee it expects based on the main PAN and the secondary issuer 104 receives the interchange fee it expects based on the PPAN, with the difference being provided by the main issuer 102. As above, the payment network does not profit from the operation of the invention because all of the difference is passed on to the secondary issuer..

The invention thus provides methods and systems that are capable of enabling a consumer 111 to select, via their communication device 110, a payment account for funding a transaction that is distinct from payment account details provided by the communication device 110 to a POS terminal. This provides improved flexibility to the user without compromising user experience.

The below pseudo-code describes the steps above that are performed by the data processing system in the method described above.
1. Receive transaction
2. If PAN is tokenised
   a. De-tokenise, get funding PAN
3. Else
   a. PAN is the funding PAN
4. If funding PAN is that of the Main Issuer
   a. Get Preferred PAN
   b. Set IR-1 to be interchange rate on funding PAN
   c. Set IR-2 to be the interchange rate on preferred PAN
   d. If IR-1 = IR-2
      i. No further action needed
   e. Else if IR-1 > IR-2
      i. Generate a message to pay IR-2 to secondary issuer
      ii. Generate a message to pay (IR-1 - IR-2) to main issuer
   f. Else
      i. Generate a message to pay IR-2 to secondary issuer
      ii Generate a message to collect (IR-2 - IR-1) from main issuer

Where IR-1 and IR-2 are the first and second interchange fee values.

Having described the invention in the context of card present transactions initiated at a merchant POS terminal, it will be appreciated by the skilled person that the invention can also be put into practice in connection with ecommerce / card not present transactions in which a payment credential is provided to a merchant portal, e.g. via a web browser installed on a data processing device, e.g. communication device 110. In this case, the invention functions in the same manner, it is just that the transaction is a card not present / ecommerce transaction that originates from a merchant portal or the like rather than a merchant POS terminal. Such scenarios are therefore also embodiments of the invention.

The invention can also be put into effect in conjunction with Mail Order Telephone Order ('MO/TO') payments in which a payment credential is entered into a virtual terminal hosted by a merchant device, e.g., a merchant laptop, desktop, tablet or other such computing device. As above, the invention functions in the same manner, it is just that the transaction is a card not present / ecommerce transaction that originates from the virtual terminal rather than a merchant POS terminal.

Further, the invention can also be put into effect in the case where a merchant operative manually enters a payment credential into the merchant POS terminal. Such transactions are known in the art as 'PAN Key entered' transactions and are a form of card not present transaction. As above, the invention functions in the same manner, it is just that the transaction is a card not present / ecommerce transaction originating from the merchant POS terminal. The invention can additionally be put into effect in magnetic stripe transactions, whereby the payment credentials are read from the magnetic stripe of the payment card. Such scenarios may encompass all, or elements of this invention, for example, some embodiments may have different dynamic or cryptographic data, or may have no such data for validation. Such scenarios are therefore further embodiments of the invention.

It is also possible to extend the invention such that the acquirer 107 and data processing server 106 configure their systems such that:
- The data processing server 106 determines the product that is being used for the transaction, and returns this to the acquirer 107. The acquirer 107 then uses this for interchange calculation. This could be used in the examples outlined in this invention (where the consumer 111 has selected to use a different product to pay with), or more generally for any card or token based transaction.
- The data processing server 106 provides the interchange calculation service 400 that determines the interchange amount, and returns this to the acquirer 107. The acquirer simply pays this amount to the data processing server 107, which can then be distributed to any parties as described earlier. This method would also work for any card or token based transaction.

Both of these methods allow:
- The acquirer 107 to have simpler logic on interchange calculation
- The data processing server 106 to work with a tokenisation service provider 108, and employ an efficient use of BINs, and store tokens of different products under one BIN, and indicate the IRD, or interchange amount to the acquirer 107

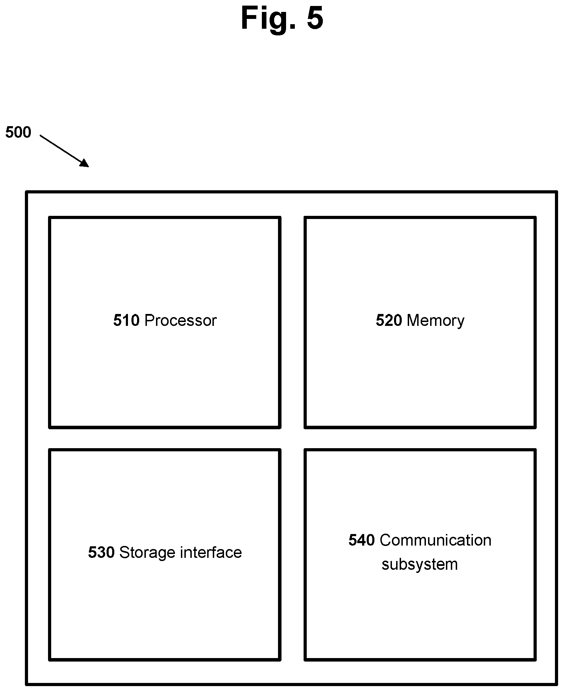

It will be apparent to a person skilled in the art that the methods described herein are all suitable for implementation by a data processing device. By way of example, Fig. 5 shows in schematic form a data processing device 500 that is suitable for performing the functions of the data processing system or communication device described above.

Data processing device 500 includes a processor 510 for executing instructions. Instructions may be stored in a memory 520, for example. Processor 510 may include one or more processing units (e.g., in a multi-core configuration) for executing instructions. The instructions may be executed within a variety of different operating systems on the data processing device 500, such as UNIX, LINUX, Microsoft Windows^{®}, etc.

Processor 510 is operatively coupled to a communication subsystem 540 such that data processing device 500 is capable of communicating with a remote device. Processor 510 may also be operatively coupled to a storage device such as storage medium via storage interface 530. The storage device is any computer-operated hardware suitable for storing and/or retrieving data. In some cases, e.g. a remotely located storage medium, communication subsystem 540 may perform the function of storage interface 530 such that these two entities are combined.

The storage medium can be integrated in data processing device 500, or it can be external to data processing device 500 and located remotely. For example, data processing device 500 may include one or more hard disk drives as a storage device. Alternatively, where the storage device is external to data processing device 500, it can comprise multiple storage units such as hard disks or solid state disks in a redundant array of inexpensive disks (RAID) configuration. The storage device may include a storage area network (SAN) and/or a network attached storage (NAS) system.

Processor 510 can be operatively coupled to the storage device via the storage interface 530. Storage interface 530 is any component capable of providing processor 510 with access to the storage device. Storage interface 530 may include, for example, an Advanced Technology Attachment (ATA) adapter, a Serial ATA (SATA) adapter, a Small Computer System Interface (SCSI) adapter, a RAID controller, a SAN adapter, a network adapter, and/or any component providing processor 510 with access to the storage device.

Memory 520 may include, but is not limited to, random access memory (RAM) such as dynamic RAM (DRAM) or static RAM (SRAM), read-only memory (ROM), erasable programmable read-only memory (EPROM), electrically erasable programmable read-only memory (EEPROM), and non-volatile RAM (NVRAM). The above memory types are exemplary only, and are thus not limiting as to the types of memory usable for storage of a computer program.

Having described aspects of the disclosure in detail, it will be apparent that modifications and variations are possible without departing from the scope of aspects of the disclosure as defined in the appended claims. As various changes could be made in the above constructions, products, and methods without departing from the scope of aspects of the disclosure, it is intended that all matter contained in the above description and shown in the accompanying drawings shall be interpreted as illustrative and not in a limiting sense.

While the disclosure has been described in terms of various specific embodiments, those skilled in the art will recognize that the disclosure can be practiced with modification within the spirit and scope of the claims.

As used herein, the term "non-transitory computer-readable media" is intended to be representative of any tangible computer-based device implemented in any method or technology for short-term and long-term storage of information, such as, computer-readable instructions, data structures, program modules and sub-modules, or other data in any device. Therefore, the methods described herein may be encoded as executable instructions embodied in a tangible, non-transitory, computer readable medium, including, without limitation, a storage device, and/or a memory device. Such instructions, when executed by a processor, cause the processor to perform at least a portion of the methods described herein. Moreover, as used herein, the term "non-transitory computer-readable media" includes all tangible, computer-readable media, including, without limitation, non-transitory computer storage devices, including, without limitation, volatile and non-volatile media, and removable and non-removable media such as a firmware, physical and virtual storage, CD-ROMs, DVDs, and any other digital source such as a network or the Internet, as well as yet to be developed digital means, with the sole exception being a transitory, propagating signal.

As will be appreciated based on the foregoing specification, the above-described embodiments of the disclosure may be implemented using computer programming or engineering techniques including computer software, firmware, hardware or any combination or subset thereof. Any such resulting program, having computer-readable code means, may be embodied or provided within one or more computer-readable media, thereby making a computer program product, i.e., an article of manufacture, according to the discussed embodiments of the disclosure. The article of manufacture containing the computer code may be made and/or used by executing the code directly from one medium, by copying the code from one medium to another medium, or by transmitting the code over a network.

## Claims

1. A computer-implemented method implemented by a data processing system, comprising:
receiving a first unique identifier associated with a payment device used to initiate a transaction and associated with a first payment account at a main issuer;
obtaining a second unique identifier corresponding to a second payment account at a secondary issuer;
calculating, using a first set of rules, a first value based on the first unique identifier;
calculating, using a second set of rules, a second value based on the second unique identifier;
calculating a difference between the first value and the second value; and either:
determining that the first value is greater than the second value,
generating a first payment instruction message having a first field,
storing the difference in the first field of the payment instruction message; and
transmitting the payment instruction message to a server of the main issuer, the payment instruction message causing a payment equal to the difference to be made by the data processing system to the main issuer,
or
determining that the second value is greater than the first value,
generating a first payment request message having a first field,
storing the difference in the first field of the payment request message; and
transmitting the payment request message to a server of the main issuer, the payment request message causing a payment equal to the difference to be made by the main issuer to the data processing system.

2. The computer-implemented method of claim 1, further comprising:
generating a second payment instruction message having a second field;
storing the second value in the second field; and
transmitting the second payment instruction message to a server of the secondary issuer to cause an amount equal to the second value to be paid to the secondary issuer by the data processing system;
wherein the second value is calculated based on a product associated with the second unique identifier.

3. The computer-implemented method of claim 1 wherein, when the second value is greater than the first value, the method further comprises:
generating a second payment instruction message having a second field;
storing the first value in the second field;
transmitting the second payment instruction message to a server of the secondary issuer to cause an amount equal to the first value to be paid to the secondary issuer;
generating a third payment instruction message having a third field;
storing the difference in the third field of the third payment instruction message; and
transmitting the third payment instruction message to the server of the secondary issuer to cause an amount equal to the difference to be paid to the secondary issuer;
wherein the first value is calculated based on a product associated with the first unique identifier.

4. The computer-implemented method of claim 2 or claim 3, wherein the product is determined based on one or more attributes of a secondary payment account linked to the second unique identifier.

5. The computer-implemented method of any preceding claim, further comprising:
receiving another payment instruction message from a server of an acquirer, the payment instruction message having a data field comprising the first value, to cause the acquirer to make a payment equal to the first value to the data processing server.

6. The computer-implemented method of any preceding claim, wherein obtaining the second unique identifier further comprises retrieving the second unique identifier by:
performing a lookup operation using the first unique identifier to identify a record in a data store corresponding to the first unique identifier; and
extracting the second unique identifier from the record.

7. The computer-implemented method of any preceding claim, wherein the payment device is a payment card, a mobile device, a smart wearable, a passive wearable, a sticker capable of payments, and a keyfob capable of making payments, a desktop computer, a tablet computer, a laptop computer or a mobile telephone.

8. The computer-implemented method of any one of claims 1 to 6, wherein the step of receiving the first unique identifier further comprises:
receiving a third unique identifier from the payment device;
sending a request to a tokenization service to provide the first unique identifier based on the third unique identifier, the request including the third unique identifier; and
receiving a response to the request, the response comprising the first unique identifier; wherein the payment device is a communication device.

9. The computer-implemented method of any preceding claim, wherein the first unique identifier is one of a funding primary account number, FPAN, a digital primary account number, DPAN and a token, and the second unique identifier is a preferred primary account number, PPAN.

10. The computer-implemented method of any preceding claim, wherein the first set of rules and second set of rules each comprise payment network card interchange rules.

11. The computer-implemented method of any preceding claim, wherein the first unique identifier is received from a merchant point of sale, POS, terminal.

12. The computer-implemented method of any one of claims 1 to 10, wherein the first unique identifier is received from one of: a server of a merchant portal; and a virtual terminal executing on a merchant device.

13. The computer-implemented method of any preceding claim, further comprising:
receiving a request to calculate an interchange rate, designator or value from a server of an acquirer;
calculating the interchange rate, designator or value; and
transmitting the interchange rate, designator or value to the server of the acquirer.

14. A data processing system configured to perform the method of any preceding claim.

15. A computer-readable medium having instructions stored thereon which, when executed by a data processing system , cause the data processing system to perform the method of any one of claims 1 to 13.
